# EUROPEAN PATENT SPECIFICATION

(11) **EP 0 654 365 B1**
(45) Date of publication and mention of the grant of the patent: **28.01.1998**
(21) Application number: 94308567.0
(22) Date of filing: 21.11.1994
(51) Int. Cl.: B60C 11/11, B60C 11/00

(54) **Low noise tyre**
Geräuscharmer Reifen
Bandage pneumatique peu bruyant

(30) Priority: 22.11.1993 JP 316052/93
(43) Date of publication of application: 24.05.1995
(73) Proprietor: SUMITOMO RUBBER INDUSTRIES LIMITED, Kobe-shi, Hyogo-ken (JP)
(72) Inventor: Kajita, Hiroaki, Nishinomiya-shi, Hyogo-ken (JP)
(74) Representative: Stewart, Charles Geoffrey

(56) References cited:
- EP-A- 0 231 448
- EP-A- 0 391 600
- EP-A- 0 454 394
- LU-A- 55 973
- PATENT ABSTRACTS OF JAPAN vol. 18, no. 292 (M-1615) 3 June 1994 & JP-A-06 055 913 (BRIDGESTONE CORP.) 1 March 1994

## Description

The present invention relates to a low noise tyre having an improved block pattern reducing running noise.

In off-the-road cars, tyres having a block type tread pattern are widely used for their superior road grip performance.

In recent years, as the expressway network is developed, opportunities for off-the-road cars with block pattern tyres to run on well-paved expressways is increasing. Thus it is required to reduce the running noise from such block pattern tyres since they generate much noise when running on well-paved roads at a high speed.

As a running noise from a tread pattern, the so called air pumping noise has been known. During high speed running, air between the tyre tread and the ground is compressed. The compressed air is released, passing through the main grooves (the circumferentially extending wide grooves) and the wide axial grooves extending from the main groves to the axially outside of the tyre. Accordingly, there is a high speed air flow from the tread centre region towards the axially outside thereof. As a result, this high speed air flow at the time of air release generates a noise, and the resonance of the wide axial groove in its longitudinal direction generates noise. Such noise has a relatively high frequency range and therefore is uncomfortable.

The pumping noise may be reduced if the number, width and/or depth of the axial grooves are decreased, but the road grip performance during off-the-road running especially on-the-snow running is then greatly deteriorated.

EP-A-0 231 448 shows a tyre in which the pumping noise has been reduced by means of transverse walls in the middle of the axial grooves.

It is therefore, an object of the present invention to provide a low noise tyre having a block type tread pattern, in which the running noise during high-speed running on a well-paved road is reduced without sacrificing off-the-road performance especially on-the-snow performance.

According to the present invention a low noise tyre comprises a tread portion provided with a block type tread pattern, said block type tread pattern comprising circumferentially extending main grooves including a pair of axially outermost main grooves and at least one axially inner main groove, and axial grooves (including first axial grooves extending between one of the axially outermost main grooves and the adjacent axially inner main groove and second axial grooves extending between one of the axially outermost main grooves and the adjacent tread edge, characterised in that the axially outer ends of the first axial grooves are disconnected from the axially outermost main groove by a shut-off rubber wall therebetween, and the axial inner ends of the second axial grooves are connected with the axially outermost main grooves.

Preferably, the thickness of the shut-off rubber wall measured in the tyre axial direction is in the range of from 1 to 3 mm.

By the provision of the shut-off rubber walls, the air flow path from the tread centre to the tread edge is shut off. As a result, a high speed air flow at the time of air release is hindered, and accordingly, the high frequency noise generated by the high speed air flow is remarkably reduced.

Further, as the first axial groove has one blind end, the frequency of the primary resonance mode is decreased to one half that of a conventional axial groove of which both ends are open. Accordingly, the harsh high-frequency noise due to resonance can be further reduced.

If the thickness of the shut-off rubber wall is less than 1 mm, the wall lacks strength and it is liable to be broken during off-the-road running. If the thickness is more than 3 mm, the road grip force by the axial grooves is decreased.

An embodiment of the present invention will now be described, by way of example only, in detail in conjunction with the accompanying drawings in which:
Fig.1 is a developed plan view;
Fig.2 is a partial perspective view of the tread portion of Fig. 1; and

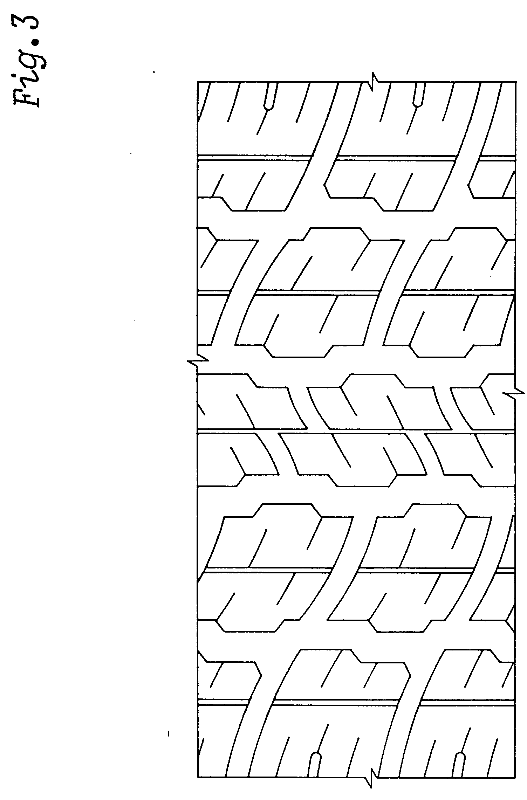

Fig.3 is a developed plan view of a reference tyre used in comparison tests.

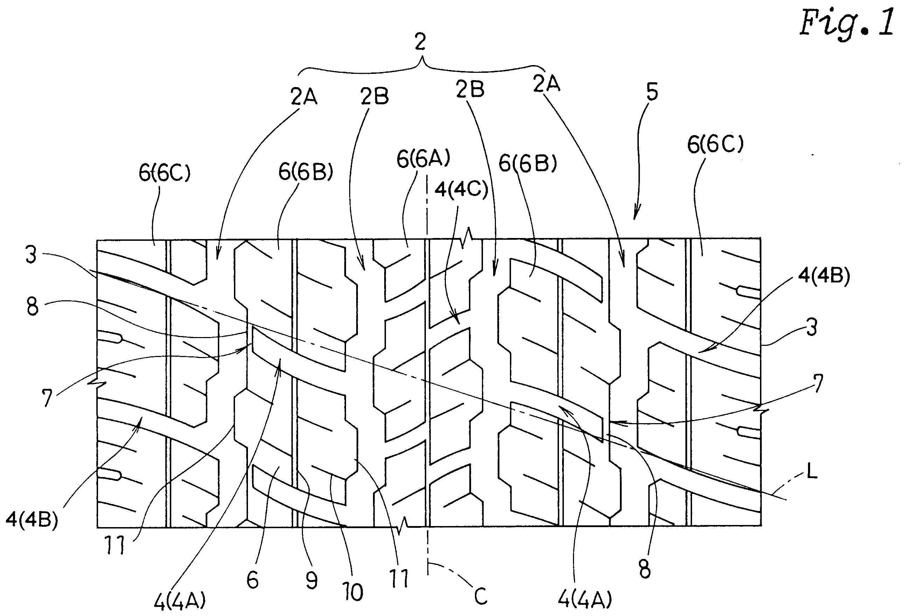

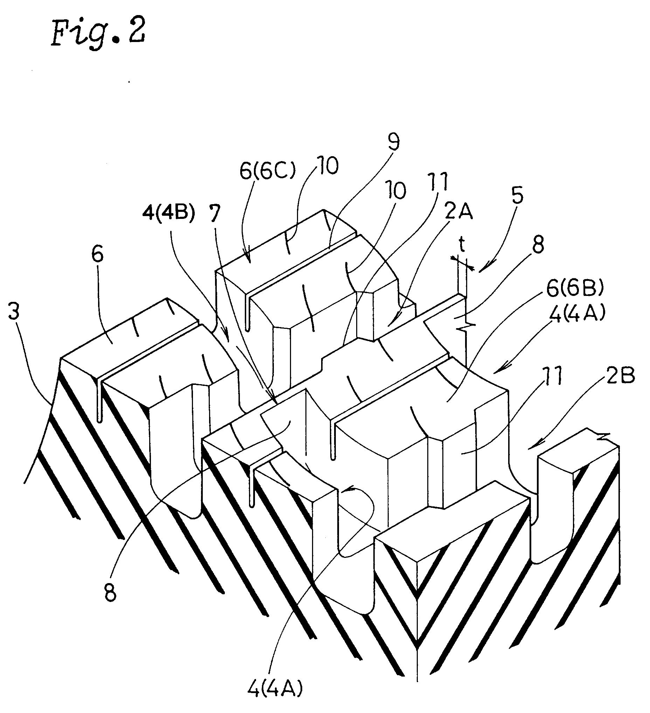

In Figs.1 and 2, a tyre according to the present invention is a pneumatic radial tyre for four-wheel-drive (4WD) cars.

The tyre comprises a tread portion 5, a pair of axially spaced bead portions, a pair of sidewall portions, a bead core or wire disposed in each bead portion, a radial ply carcass turned up around the bead cores, and a tread reinforcing belt, such as a steel breaker and a nylon band or bandage, disposed radially outside the carcass.

The tread portion 5 is provided with a block type tread pattern. The tread pattern comprises at least three main grooves 2 extending continuously in the circumferential direction of the tyre so as to axially divide the tread width into substantially equal or almost equal width parts, and axial grooves 4 substantially dividing the above-mentioned parts into blocks 6.

Here, the tread width is the distance between the tread edges 3, that is, the maximum axial width of the ground contacting region of the tread in the normal state in which the tyre is mounted on a standard rim and inflated standard pressure and loaded with the normal load.

The main groove 2 is a groove having a width of more than 3 % of the tread width and a depth of more than 4 % of the tread width.

The axial groove 4 is a groove having a width of more than 1.5 % of the tread width and a depth of more than 4 % of the tread width.

In this invention, the number of wide main grooves 2 is preferably three or four. In order to increase the road grip force, narrow grooves and sipes (or cuts) are preferably used.

In this example, as shown in Figs.1 and 2, the main grooves 2 include a pair of axially inner main grooves 2B each disposed on each side of the tyre equator C, and a pair of axially outer main grooves 2A each disposed axially outside of each of the axially inner main grooves 2B.

Each of the main grooves 2A and 2B is a zigzag groove comprising circumferential segments and oblique segments which are arranged alternately in the tyre circumferential direction to form corners and edges on the groove walls, thereby increasing the wet and snow grip performance.

Further, in this example, between the main grooves 2 and between the axially outermost main grooves 2A and the tread edges 3, a straight narrow groove 9 extending continuously in the circumferential direction is disposed to improve the lateral grip performance.

The narrow grooves 9 have a width of less than 1% of the tread width and a depth of about 2 to 3 % of the tread width.

The axial grooves 4 in this example include axial grooves 4C extending from the axially inner main grooves 2B to the tyre equator C, axial grooves 4B extending from the axially outermost main grooves 2A to the tread edges 3, and axial grooves 4A extending from the axially inner main grooves 2B to a position axially before the axially outer main grooves 2A.

Accordingly, a shut-off wall 8 made of tread rubber is formed between the axially outer end 7 of the axial groove 4A and the axially inner wall of the axially outer main groove 2A.

The thickness (t) of the shut-off rubber wall 8 is preferably set in the range of from 1 to 3 mm from the top to the bottom of the axial groove.

The depth of the axial grooves 4 is about 80 % of the depth of the main grooves 2.

Further, in this example, the axial grooves 4A and 4B are inclined towards the same direction at almost same angle of about 70 degrees with respect to the tyre equator C (to have a left side upward inclination in Fig.1). However, the axial grooves 4C are inclined in the reverse direction at the almost same angle of about 70 degrees with respect to the tyre equator C (to have a right side upward inclination in Fig.1). Incidentally, the inclinations of the axial grooves 4A, 4B and 4C can be reversed to those shown in Fig.1.

The tread portion 5 in this example is therefore, provided with five rows of blocks 6 (6A, 6B and 6C) having a generally parallelogram configuration, with the circumferential edges having a trapezoidal protruding portion 11.

Further, the axial grooves 4C are circumferentially staggered at the tyre equator C.

All the axial grooves 4 are slightly curved such that the grooves 4B, 4A, 4C, 4C, 4A and 4B (from the left side to right side of Fig.1) are curved convexly, concavely, concavely, convexly, convexly and concavely, respectively or vice versa.

The axial grooves 4B and 4A on the left side of the tyre equator and the axial grooves 4A and 4B on the right side of the tyre equator are almost arranged in a line L as shown in Fig.1.

As a result, the noise due to synchronous impacts by the blocks is avoided, and the running noise is effectively reduced.

Furthermore, each of the blocks 6A, 6B and 6C is provided with two or three sipes 10 (cuts having no width) extending parallel to the adjacent axial grooves 4.

The main grooves 2A and 2B have a width of about 4 to 5 % of the tread width and a depth of about 5 to 6 % of the tread width.

The axial grooves 4A and 4B have a width of about 2 to 4 % of the tread width and a depth of about 4 to 5 % of the tread width. The axial grooves 4C have a width of about 2 to 3 % of the tread width and a depth of more than 2 to 3 % of the tread width.

The narrow grooves 9 have a width of about 1 mm and a depth of about 4 to 5 mm.

Test tyres of size 265/70R16 having the same construction excepting the shut-off rubber walls were prepared and tested for the running noise and snow grip performance. The test results are shown in Table 1.
1) Running noise test
   According to the coasting test procedure specified in Japanese JASO-C606, a 2000cc 4WD car provided with the test tyres was coasted on a straight test course for a distance of 50 meters at a speed of 60 kilometre/hour, and the maximum sound level dB(A) of the running noise was measured.
2) Snow grip performance test
   By starting, accelerating and braking the test car provided with the test tyres, the snow grip performance was evaluated by the driver's feel. The results are indicated by an index based on that the reference tyre is 100. The larger the value, the better the traction performance.

**Table 1**

| Tyre | Ref. | Ex.1 | Ex.2 |
|---|---|---|---|
| Tread pattern | Fig.3 | Fig.1 | Fig.1 |
| Wall thickness (mm) | - | 1 | 3 |
| Running noise dB(A) | 70.5 | 70 | 69.5 |
| Snow grip | 100 | 100 | 100 |

It was confirmed through the tests that the tyre according to the present invention can be improved in the running noise without deteriorating the grip performance.

## Claims

1. A low noise tyre comprising a tread portion provided with a block type tread pattern, said block type tread pattern comprising circumferentially extending main grooves (2) including a pair of axially outermost main grooves (2A) and at least one axially inner main groove (2B), and axial grooves (4) including first axial grooves (4A) extending between one of the axially outermost main grooves (2A) and the adjacent axially inner main groove (2B) and second axial grooves (4B) extending between one of the axially outermost main grooves (2A) and the adjacent tread edge (3), and the axial inner ends of the second axial grooves (4B) being connected with the axially outermost main grooves (2A), characterised in that the axially outer ends of the first axial grooves (4A) are disconnected from the axially outermost main groove (2A) by a shut-off rubber wall (8) therebetween.

2. A low noise tyre according to claim 1, characterised in that there is no axial groove (4) axially inside of and connected to the axially outermost main groove (2A).

3. A low noise tyre according to either of claims 1 or 2, characterised in that the thickness of the shut-off rubber wall measured in the tyre axial direction is in the range of from 1 to 3 mm.

4. A low noise tyre according to claim 1, characterised in that the first and second axial grooves (4A, 4B) are inclined in the same direction.

5. A low noise tyre according to claim 4, characterised in that all the axial grooves are curved.

6. A low noise tyre according to claim 5, characterised in that said circumferentially extending main grooves (2) include said pair of axially outermost main grooves (2A) and two axially inner main groove (2B) to provided five rows of blocks.

7. A low noise tyre according to claim 6, characterised in that the first and second axial grooves on one side of the tyre equator and the first and second axial grooves on the other side of the tyre equator are almost arranged in a line (L).

## Patentansprüche

1. Niedriggeräuschreifen umfassend einen Laufflächenabschnitt, der mit einem Laufflächenprofil vom Blocktyp versehen ist, wobei das Laufflächenprofil vom Blocktyp sich in Umfangsrichtung erstreckende Hauptrillen (2), die ein Paar axial äußerster Hauptrillen (2A) und mindestens eine axial innere Hauptrille (2B) aufweisen, und axiale Rillen (4) umfaßt, die erste axiale Rillen (4A), die sich zwischen einer der axial äußersten Hauptrillen (2A) und der benachbarten axial inneren Hauptrille (2B) erstrecken, und zweite axiale Rillen (4B) aufweisen, die sich zwischen einer der axial äußersten Hauptrillen (2A) und dem benachbarten Laufflächenrand (3) erstrecken, und die axialen inneren Enden der zweiten axialen Rillen (4B) mit den axial äußersten Hauptrillen (2A) verbunden sind,
dadurch **gekennzeichnet,**
daß die axial äußeren Enden der ersten axialen Rillen (4A) von der axial äußersten Hauptrille (2A) durch eine Abtrenngummiwand (8) dazwischen getrennt sind.

2. Niedriggeräuschreifen nach Anspruch 1,
dadurch **gekennzeichnet,**
daß es keine axiale Rille (4) axial innerhalb von und verbunden mit der axial äußersten Hauptrille (2A) gibt.

3. Niedriggeräuschreifen nach einem der Ansprüche 1 oder 2,
dadurch **gekennzeichnet,**
daß die in der Reifenaxialrichtung gemessene Dicke der Abtrenngummiwand in dem Bereich von 1 bis 3 mm liegt.

4. Niedriggeräuschreifen nach Anspruch 1,
dadurch **gekennzeichnet,**
daß die ersten und zweiten axialen Rillen (4A, 4B) in die gleiche Richtung geneigt sind.

5. Niedriggeräuschreifen nach Anspruch 4,
dadurch **gekennzeichnet,**
daß alle axialen Rillen gekrümmt sind.

6. Niedriggeräuschreifen nach Anspruch 5,
dadurch **gekennzeichnet,**
daß die sich in Umfangsrichtung erstreckenden Hauptrillen (2) das Paar axial äußerster Hauptrillen (2A) und zwei axial innere Hauptrille (2B) aufweisen für vorgesehene fünf Reihen von Blöcken.

7. Niedriggeräuschreifen nach Anspruch 6,
dadurch **gekennzeichnet,**
daß die ersten und zweiten axialen Rillen auf einer Seite des Reifenäquators und die ersten und zweiten axialen Rillen auf der anderen Seite des Reifenäquators fast in einer Linie (L) angeordnet sind.

## Revendications

1. Pneumatique peu bruyant, comprenant une partie de bande de roulement ayant une sculpture de bande de roulement du type à blocs, la sculpture de bande de roulement du type à blocs comprenant des gorges principales (2) disposées circonférentiellement et comprenant une paire de gorges principales axialement externes (2A) et au moins une gorge principale axialement interne (2B), et des gorges axiales (4) comprenant des premières gorges axiales (4A) disposées entre l'une des gorges principales axialement externes (2A) et la gorge principale axialement interne adjacente (2B), et des secondes gorges axiales (4B) disposées entre l'une des gorges principales axialement externes (2A) et le bord adjacent de la bande de roulement (3) , et les extrémités axiales internes des secondes gorges axiales (4B) étant raccordées aux gorges principales axialement externes (2A), caractérisé en ce que les extrémités axialement externes des premières gorges axiales (4A) sont déconnectées de la gorge principale axialement externe (2A) par une paroi de caoutchouc d'arrêt (8) placée entre elles.

2. Pneumatique peu bruyant selon la revendication 1, caractérisé en ce qu'il ne comporte pas de gorge axiale (4) axialement à l'intérieur de la gorge principale axialement externe (2A) et raccordée à celle-ci.

3. Pneumatique peu bruyant selon la revendication 1 ou 2, caractérisé en ce que l'épaisseur de la paroi de caoutchouc d'arrêt mesurée dans la direction axiale du pneumatique est comprise entre 1 et 3 mm.

4. Pneumatique peu bruyant selon la revendication 1, caractérisé en ce que les premières et secondes gorges axiales (4A, 4B) sont inclinées dans la même direction.

5. Pneumatique peu bruyant selon la revendication 4, caractérisé en ce que toutes les gorges axiales sont courbes.

6. Pneumatique peu bruyant selon la revendication 5, caractérisé en ce que les gorges principales (2) disposées circonférentiellement comprennent la paire de gorges principales axialement externes (2A) et deux gorges principales axialement internes (2B) formant quatre lignes de blocs.

7. Pneumatique peu bruyant selon la revendication 6, caractérisé en ce que les premières et secondes gorges axiales placées d'un premier côté de l'équateur du pneumatique et les premières et secondes gorges axiales placées de l'autre côté de l'équateur du pneumatique sont presque disposées sur une ligne (L).
